# EUROPÄISCHE PATENTSCHRIFT

(11) **EP 1 776 374 B1**
(45) Veröffentlichungstag und Bekanntmachung des Hinweises auf die Patenterteilung: **01.04.2015**
(21) Anmeldenummer: 05772341.3
(22) Anmeldetag: 10.08.2005
(51) Int. Cl.: C07F 15/00, C07C 45/77, C07C 49/92

(54) **VERFAHREN ZUR HERSTELLUNG VON IRIDIUM(III)KETOKETONATEN**
METHOD FOR PRODUCING IRIDIUM(III)KETO KETONATES
PROCEDE DE PRODUCTION DE CETOCETONATES D'IRIDIUM(III)

(30) Priorität: 12.08.2004 EP 04019137
(43) Veröffentlichungstag der Anmeldung: 25.04.2007
(73) Patentinhaber: Merck Patent GmbH, 64293 Darmstadt (DE)
(72) Erfinder: STÖSSEL, Philipp, 60497 Frankfurt am Main (DE); BACH, Ingrid, 65719 Hofheim (DE); PARHAM, Amir, 65929 Frankfurt (DE); BREUNING, Esther, 65527 Niedernhausen (DE); SPREITZER, Hubert, 68519 Viernheim (DE)
(86) Internationale Anmeldenummer: PCT/EP2005/008670
(87) Internationale Veröffentlichungsnummer: WO 2006/018202

(56) Entgegenhaltungen:
- WO-A-02/060910
- WO-A-2004/085449
- M. A. BENNETT ET AL.: ".gamma.-Carbon-Bonded 2,4-Pentaedionato Complexes of Trivalent Iridium" INORGANIC CHEMISTRY., Bd. 15, Nr. 11, 1976, Seiten 2936-2938, XP002350264 USAMERICAN CHEMICAL SOCIETY. EASTON. in der Anmeldung erwähnt
- COLLINS J E ET AL: "SYNTHESIS, CHARACTERIZATION, AND MOLECULAR STRUCTURE OF BIS(TETRAPHENYLCYCLOPENADIENYL)RHODIUM(II) " ORGANOMETALLICS, WASHINGTON, DC, US, Bd. 14, Nr. 3, 1995, Seiten 1232-1238, XP002221731 ISSN: 0276-7333
- LIU ET AL: "Synthesis and Structural Characterization of Novel Organometallic, Rh(III), Bis(acetylacetonate) Complexes" ORGANOMETALLICS, ACS, WASHINGTON, DC, US, Bd. 23, Nr. 15, 19. Juli 2004 (2004-07-19), Seiten 3584-3586, XP002312300 ISSN: 0276-7333 in der Anmeldung erwähnt
- LIU ET AL: ORGANOMETALLICS, ACS, WASHINGTON, DC, US, 19. Juli 2004 (2004-07-19), Seiten 1-3, XP002312301 ISSN: 0276-7333 in der Anmeldung erwähnt

## Beschreibung

Metallorganische Verbindungen - speziell Verbindungen der d⁸-Metalle-werden in naher Zukunft als funktionelle Materialien in einer Reihe verschiedenartiger Anwendungen, die im weitesten Sinne der Elektronikindustrie zugerechnet werden können, Einsatz als farbgebende Komponenten finden. Eine Entwicklung hierzu, die sich in den letzten Jahren abzeichnet, ist der Einsatz metallorganischer Iridium(III)komplexe, die Phosphoreszenz statt Fluoreszenz zeigen (M. A. Baldo, S. Lamansky, P. E. Burrows, M. E. Thompson, S. R. Forrest, Appl. Phys. Lett. 1999, 75,4-6). Der effiziente chemisch-synthetische Zugang zu den entsprechenden, hochreinen Organo-Iridium-Verbindungen ist für einen erfolgreichen technischen Einsatz unerläßlich. Dies ist sowohl unter wirtschaftlichen Gesichtspunkten geboten, als auch unter dem Aspekt der ressourcenschonenden Nutzung der genannten Verbindungsklasse.

Wie in WO 02/060910 und WO 04/085449 beschrieben, eignen sich homoleptische und heteroleptische tridium-β-ketoketonate, insbesondere Acetylacetonate (im folgenden abgekürzt als acac) besonders gut als Ausgangverbindungen für hochreine Organo-Iridium-Verbindungen, da mit ihnen hohe Ausbeuten erhalten werden. Weiterhin eignen sich die homoleptischen und heteroleptischen Ketoketonat-Komplexe als Katalysatoren bzw. Katalysatorvorstufen für verschiedene organische Umsetzungen. Auch als Ausgangsverbindung für beispielsweise keramische Farben, MOCVD (metal organic chemical vapor deposition) oder heterogene Katalysatoren können sie eingesetzt werden. Es besteht also ein großer Bedarf an diesen Ausgangsverbindungen.

In der Literatur sind verschiedene Methoden zur Synthese homoleptischer Iridium-β-ketoketonate bekannt:
Dwyer et al. (J. Amer. Chem. Soc. 1953, 75, 984) beschreiben die Synthese ausgehend von K₂IrCl₆. Nachteilig an diesem Verfahren ist der sehr aufwendige Verfahrensablauf, der das Abrauchen mit konzentrierter Schwefelsäure beinhaltet, sowie die geringe Ausbeute von lediglich 10 %.
Davignon et al. (J. Less Common Metals 1970, 21, 345) beschreiben drei unterschiedliche Verfahren, die jeweils nur Ausbeuten zwischen 5 und 15 % liefern. Benett et al. (Inorg. Chem. 1976, 15, 2936) beschreiben die Synthese von Ir(acac)₃ aus IrCl₃ in reinem Hacac mit NaHCO₃ als Base, wobei das Produkt durch Extraktion mit gesundheitlich bedenklichem Dichlormethan separiert und durch Säulenchromatographie gereinigt wird. Nachteilig ist weiterhin die geringe Ausbeute von lediglich 18 %. Auch die Verwendung chromatographischer Methoden ist im technischen Maßstab nicht praktikabel.
In JP 07316176 wird ein Verfahren zur Herstellung von Ir(acac)₃ offenbart, bei dem IrCl₃ mit Acetylaceton in Wasser unter Zusatz einer Base zur Reaktion gebracht wird. Das Produkt wird durch Extraktion mit Benzol separiert. Außer der problematischen Verwendung von cancerogenem Benzol ist auch hier die geringe Ausbeute von 20 % nachteilig.
In EP 1088812 wird ein Verfahren zur Herstellung von Ir(acac)₃ offenbart, bei dem eine Iridium(IV)-Verbindung zu Iridium(III) reduziert wird, mit Acetylaceton bei einem pH-Wert von 6.5 bis 7.5 bei ca. 70 °C zur Reaktion gebracht wird und der erhaltene Niederschlag abfiltriert wird. Auch hier sind die Ausbeuten mit ca. 22 % noch nicht zufriedenstellend. Weiterhin nachteilig sind die langen Reaktionszeiten in der Größenordnung von 48 h.
Alle beschriebenen Methoden haben eine sehr geringe Ausbeute gemeinsam. Es existiert also noch kein zufriedenstellendes und insbesondere ressourcenschonendes Verfahren zur Synthese von Ir(acac)₃.

Aus Collins et al. (Organometallics 14(3), 1995, 1232-1238) ist ein Verfahren zur Herstellung von Ir(acac)₃ durch Reaktion von Iridiumchlorid Hydrat mit Acetylaceton in wässriger Natriumhydrogencarbonatlösung bekannt. Das Reaktionsprodukt, das während der Reaktion ausfällt, wird durch Vakuumfiltration abgetrennt und weiter aufgereinigt durch Umkristallisation aus Methanol.

Über die Synthese heteroleptischer Iridium-β-ketoketonate mit einfachen Co-Liganden, die nicht über Kohlenstoff an das Metall gebunden sind, wurde in der Literatur kaum berichtet. Lediglich die Synthese von Komplexen, die außer zwei Liganden acac noch einen Liganden acac, der über Kohlenstoff gebunden ist, und einen Stickstoff-haltigen Liganden, wie beispielsweise Pyridin, enthalten, ist bekannt (M. A. Bennett et al., Inorg. Chem. 1976, 15, 2936). Bei dieser Synthese entsteht jedoch immer eine Mischung mit dem homoleptischen Komplex, der in einem separaten Extraktionsschritt aufwendig abgetrennt werden muß. Jedoch ist gerade auch der Zugang zu heteroleptischen Komplexen als Ausgangsverbindung für weitere Synthesen hochrelevant, wie oben beschrieben.

Die Synthese des heteroleptischen Rhodium-Komplexes Na[Rh(acac)₂Cl₂] (X. Y. Liu et al., Organometallic 2004, 23, 3584) kann durch Umsetzung von Rhodiumchlorid-Hydrat mit Acetylaceton und Natriumhydrogencarbonat in Methanol erfolgen. Dabei wird das Produkt nach Umkristallisation aus Methanol in 58 % Ausbeute erhalten.

Ein Versuch, die Synthese entsprechend mit Iridiumchlorid-Hydrat nachzustellen, führt jedoch zu einem undefinierten Reaktionsgemisch, so daß der Fachmann aus dieser Veröffentlichung keine Lehre ziehen kann, wie entsprechende heteroleptische Iridium-Komplexe zugänglich sein könnten.

Überraschend wurde nun gefunden, daß homoleptische und heteroleptische Iridium-Ketoketonat-Komplexe einfach, schnell und in sehr guten Ausbeuten erhalten werden, wenn die Reaktion, ausgehend von einem Iridium(III)-Salz, in mindestens zwei Schritten geführt wird, wobei jeweils unterschiedliche Lösemittel bzw. Lösemittelmischungen verwendet werden und zwischen den Reaktionsschritten das Lösemittel der Reaktionsmischung ausgetauscht wird.

Die vorliegende Erfindung beschreibt dementsprechend ein Verfahren zur Herstellung von Iridium(III)-Komplexen der Formel (3) oder (4), 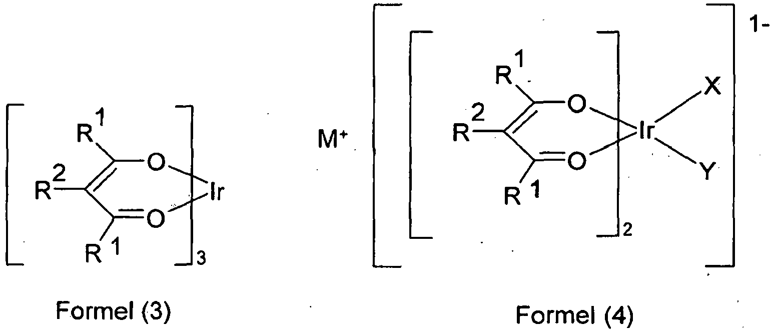 wobei gilt:
- X, Y: ist gleich oder verschieden bei jedem Auftreten ein einzähniger, monoanionischer Ligand, der über ein Heteroatom an das Iridium gebunden ist;
- M⁺: ist ein einwertiges Kation;
- R¹, R²: ist gleich oder verschieden bei jedem Auftreten H, CN, eine geradkettige, verzweigte oder cyclische Alkyl- oder Alkoxygruppe mit 1 bis 20 C-Atomen, wobei eine oder mehrere nicht benachbarte CH₂-Gruppen durch -O-, -S-, -NR³-, -CONR³-, -CO-O-, -CR³=CR³- oder -C≡C- ersetzt sein können und wobei ein oder mehrere H-Atome durch F ersetzt sein können, oder ein aromatisches oder heteroaromatisches Ringsystem mit 4 bis 14 C-Atomen, das durch einen oder mehrere nicht-aromatische Reste R¹ substituiert sein kann; dabei können mehrere Substituenten R¹ und/oder R² zusammen wiederum ein weiteres mono- oder polycyclisches, aliphatisches oder aromatisches Ringsystem aufspannen;
- R³: ist gleich oder verschieden bei jedem Auftreten H oder ein aliphatischer oder aromatischer Kohlenwasserstoffrest mit 1 bis 20 C-Atomen,
durch Umsetzung eines Iridium(III)salzes mit Verbindungen enthaltend Anionen gemäß Formel (2), 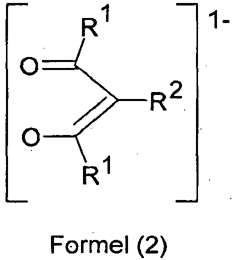 wobei für die Synthese von Komplexen der Formel (3) das Verhältnis von Iridium-(III)salz zu Anion gemäß Formel (2) 1 : 4 bis 1: 100 beträgt und für die Synthese von Komplexen der Formel (4) das gesamtstöchiometrische Verhältnis von Iridium(III)salz zu Anion gemäß Formel (2) 1 : 2 bis 1 : 4 beträgt,
dadurch gekennzeichnet, daß die Edukte in einem ersten Lösemittel oder Lösemittelgemisch zur Reaktion gebracht werden, wobei als Lösemittel Wasser bzw. ein Gemisch aus Wasser mit einem dipolar-protischen oder dipölar-aprotischen Lösemitteln verwendet wird, dann das Lösemittel oder Lösemittelgemisch partiell oder vollständig unter überwiegendem Erhalt der Stoffmenge der salzartigen Komponenten der Reaktionsmischung ausgetauscht wird, wobei der Lösemittelaustausch nicht durch Abfiltrieren eines ausgefallenen Anteils des bereits entstandenen Produkts mit anschließender Umkristallisation erfolgt und wobei zwischen dem ersten und dem zweiten Reaktionsschritt nicht filtriert wird, und die Reaktion in einem weiteren Schritt in einem weiteren Lösemittel oder Lösemittelgemisch, das vom ersten Lösemittel oder Lösemittelgemisch verschieden ist und das ein dipolar-protisches Lösemittel ist, vervollständigt wird, wobei das Zwischenprodukt bzw. Rohprodukt nach dem ersten Reaktionsschritt als Feststoff isoliert wird und wobei die Umsetzung in einem Temperaturbereich von 20 °C bis 200 °C durchgeführt wird.

Unter einem Lösemittel im Sinne dieser Erfindung werden Stoffe verstanden, die andere Stoffe auf physikalischem Wege zur Lösung bringen oder suspendieren können, ohne daß das Lösemittel direkt an der Reaktion teilnimmt, insbesondere nicht dauerhaft im Produkt als Ligand in die Koordinationssphäre des Iridiums aufgenommen wird.

Dabei erfolgt der erfindungsgemäße Lösemittelaustausch entweder kontinuierlich, oder das Zwischenprodukt wird isoliert und dann weiter in einem zweiten Lösemittel oder Lösemittelgemisch umgesetzt.

Erfindungsgemäß bleibt beim Lösemittelaustausch die Stoffmenge der salzartigen Komponenten der Reaktionsmischung erhalten. Dies bedeutet, daß der Lösemittelaustausch nicht das Abfiltrieren eines eventuell ausgefallenen Anteils des bereits entstandenen Produkts mit anschließender Umkristallisation bedeutet, wie es bereits in der Literatur beschrieben ist, da dies nur zu geringen Ausbeuten führt. Salzartige Komponenten in der Reaktionsmischung sind beispielsweise alle Iridium-Verbindungen, Base (beispielsweise Hydrogencarbonatsalze) und Acetylacetonat-Anionen, während beispielsweise überschüssiges nicht-deprofoniertes Acetylaceton beim Lösemittelaustausch mit abgetrennt werden kann. Überwiegender Erhalt der Stoffmenge der salzärtigen Komponenten bedeutet, daß eine kleine Menge ausgefallener Nebenprodukte abfiltriert und verworfen werden kann oder daß ein Teil des Acetylacetonats, welches im Gleichgewicht mit Acetylaceton steht, durch Verdampfung nicht in der Mischung erhalten bleibt. Bevorzugt wird jedoch zwischen den beiden Reaktionsschritten nicht filtriert.

Die Liganden gemäß Formel (2) stellen, je nach der Bedeutung des Restes R¹, die entsprechenden Anionen von β-Ketoketonen, β-Ketoestern oder β-Diestern dar.

Unter einem Liganden X bzw. Y, der über ein Heteroatom an das Iridium gebunden ist, wird ein Ligand verstanden, der über ein Atom ungleich Kohlenstoff an das Iridium bindet; es handelt sich also nicht um metallorganische Liganden, die eine direkte Iridium-Kohlenstoff-Bindung ausbilden.

Die nach dem erfindungsgemäßen Verfahren hergestellten homoleptischen Iridium(111)-Komplexe besitzen eine Struktur gemäß Formel (3), 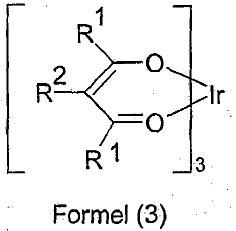 wobei R¹, R² und R³ die oben genannten Bedeutungen haben.

Die nach dem erfindungsgemäßen Verfahren hergestellten heteroleptischen Iridium(III)-Komplexe besitzen bevorzugt eine Struktur gemäß Formel (4), 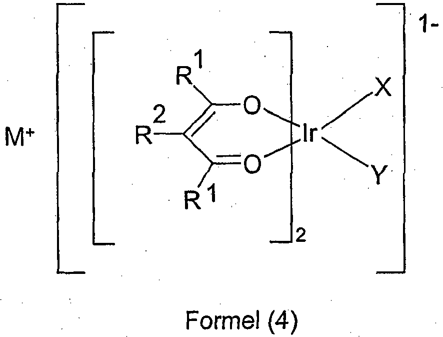 wobei X, Y, R¹, R² und R³ die oben genannten Bedeutungen haben und M⁺ ein einwertiges Kation darstellt.

Besonders bevorzugt sind Verfahren, dadurch gekennzeichnet, daß in Formel (4) X = Y gilt. Verbindungen der Formel (4) mit X = Y sind besonders leicht zugänglich, woraus sich hierfür diese Bevorzugung ergibt.

Die beschriebenen Verfahren führen häufig zu Gemischen isomerer heteroleptischer Iridiumkomplexe gemäß Formel (4). Dementsprechend bevorzugt sind erfindungsgemäße Verfahren, dadurch gekennzeichnet, daß der gebildete heteroleptische Iridium(III)-Komplex gemäß Formel (4) ein Gemisch von mindestens zwei Isomeren ist.

Besonders bevorzugt sind die oben beschriebenen Verfahren, dadurch gekennzeichnet, daß der gebildete heteroleptische Iridium(III)-Komplex gemäß Formel (4) ein Gemisch aus dem *cis*-Isomeren gemäß Formel (4a) und dem *trans-*Isomeren gemäß Formel (4b) bezüglich der X- und Y-Anionen ist, 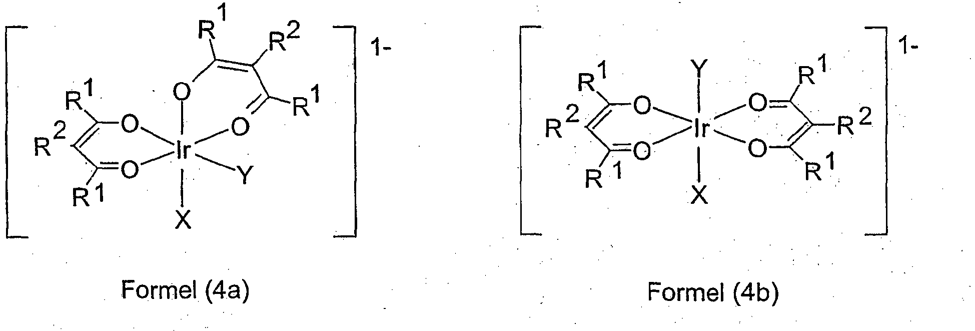 wobei R¹, R², H³, X und Y die oben genannten Bedeutungen haben.

Die Co-Liganden X und Y werden bevorzugt ausgewählt aus der Gruppe einzähniger Liganden bestehend aus F⁻, Cl⁻, Br⁻, I⁻, OH⁻, OR⁻, CN⁻, OCN⁻, SCN⁻, NO₂⁻, NO₃⁻ oder R-COO⁻, wobei R für einen organischen Rest mit 1 bis 20 C-Atomen steht, bevorzugt für eine Alkylkette. Besonders bevorzugt sind Verfahren, bei denen X und Y = Cl⁻, Br⁻ oder OH- ist, ganz besonders bevorzugt Cl⁻ oder BF⁻, insbesondere Cl⁻.

Als Ausgangsverbindung für die oben beschriebenen Verfahren werden bevorzugt Iridium(III)salze der Formel IrX₃ oder M₃IrX₆, wobei M gleich einem Proton, einem Alkalimetallkation oder einem Ammoniumion ist und X die oben genannte Bedeutung hat, oder gegebenenfalls ein Hydrat oder ein Hydrochlorid Hydrat dieser Salze eingesetzt.
Besonders bevorzugt ist die Verwendung von Iridium(III)chlorid in Form des Hydrats oder Hydrochlorid Hydrats der Formel IrCl₃ * y H₂O oder IrCl₃ * x HCl * y H₂O mit x = 0 bis 10 und y = 0 bis 100, bevorzugt y = 1 bis 100 oder von Iridium(III)bromid in Form des Hydrats oder Hydrochlorid Hydrats der Formel IrBr₃ * y H₂O oder
IrBr_{3 *} x HCl * y H₂O, wobei x und y die oben genannten Bedeutungen haben; ganz besonders bevorzugt ist die Verwendung von Iridium(III)chlorid in Form des Hydrats oder Hydrochlorid Hydrats gemäß der oben genannten Formel.
Es kann auch gegebenenfalls zunächst eine Iridium(IV)-Verbindung eingesetzt werden, die in einem ersten Schritt zu Iridium(III) reduziert wird, so daß das eigentliche erfindungsgemäße Verfahren wiederum von Iridium(III) ausgeht. Dabei ist es für das erfindungsgemäße Verfahren auch nicht hinderlich, wenn die entsprechende Iridium(III)-Verbindung noch Anteile an Iridium(IV) enthält.

Die nach dem erfindungsgemäßen Verfahren hergestellten heteroleptischen Iridium(III)-Komplexe besitzen als Gegenkation M bevorzugt ein Alkali-, ein Erdalkali-, ein Ammonium-, ein Tetraalkylammonium-, ein Tetraalkylphosphonium- oder ein Tetraarylphosphoniumkation. Besonders bevorzugt sind erfindungsgemäße Verfahren, bei denen die Iridium(III)-Komplexe als Gegenkation ein Alkalikation, ganz besonders bevorzugt Natrium oder Kalium aufweisen.

Weiterhin bevorzugt sind Verfahren, bei denen R¹ und R² gleich oder verschieden bei jedem Auftreten für H, eine geradkettige, verzweigte oder cyclische Alkyl- oder Alkoxygruppe mit 1 bis 5 C-Atomen, wobei auch ein oder mehrere H-Atome durch Fluor ersetzt sein können, oder eine Aryl- oder Heteroarylgruppe mit 4 bis 6 C-Atomen, die durch einen oder mehrere nicht aromatische Reste R¹ substituiert sein kann, stehen.
Besonders bevorzugt sind erfindungsgemäße Verfahren, dadurch gekennzeichnet, daß R¹ eine Alkylgruppe oder Fluoralkylgruppe mit 1 bis 5 C-Atomen, ganz besonders bevorzugt CH₃ oder CF₃, insbesondere CH₃, und R² = H ist. Ganz besonders bevorzugt stellt der Ligand gemäß Formel (2) also ein Acetylacetonat-Anion dar.

Gemäß dem oben beschriebenen erfindungsgemäßen Verfahren wird die Verbindung enthaltend Anionen gemäß Formel (2) in Form eines Salzes eines einwertigen oder zweiwertigen anorganischen oder organischen Kations, bevorzugt in Form seines Lithium, Natrium- oder Kaliumsalzes, eingesetzt.
Der Ligand gemäß Formel (2) kann aber ebenso *in situ* durch Deprotonierung aus dem entsprechenden 1,3-Diketon, 3-Ketoester oder 1,3-Diester mit einer Base dargestellt werden. Alternativ können auch einfache Derivate der genannten Anionen, wie ihre Schiffschen Basen, Azomethine, Oxime, Hydrazone, Acetale, Ketale, Halbketale, Aminale, usw. eingesetzt werden, da diese Verbindungen im ersten Schritt durch das Lösemittel oder Lösemittelgemisch in Anwesenheit von Wasser zu den entsprechenden 1,3-Diketonen, 3-Ketoestern oder 1,3-Diestern hydrolysiert werden können. Das dazu benötigte Wasser wird entweder direkt als Lösemittel zugesetzt oder stammt gegebenenfalls aus dem Hydratwasser des Iridiumsalzes:
Die Deprotonierung des 1,3-Diketons, 3-Ketoester oder 1,3-Diester unter Bildung der Anionen der Formel (2) erfolgt bevorzugt mit Hydrogencarbonat, Carbonat oder Hydroxid, insbesondere den entsprechenden Natrium- oder Kaliumsalzen, oder mit wäßrigem Ammoniak. Besonders bevorzugt erfolgt die Deprotonierung mit Hydrogencarbonat, insbesondere Natrium- oder Kaliumhydrogencarbonat. Weiterhin ist es auch möglich, daß die Deprotonierung nicht durch eine separat zugesetzte Base erfolgt, sondern durch das Gegenion der Iridiumverbindung, wenn dieses ausreichend basisch ist, beispielsweise Ir(OH)₃.

Der pH-Wert der Reaktionslösung beträgt bevorzugt zwischen 3 und 8, besonders bevorzugt zwischen 4 und 7. Dabei kann es auch sinnvoll sein, den pH-Wert der Lösung während der Reaktion, insbesondere während des ersten Reaktionsschritts, immer wieder auf einen bestimmten Wert einzustellen bzw. die Base in kleinen Portionen zuzugeben.

Das gesamtstöchiometrische Verhältnis von Iridium(III)salz zu Anionen gemäß Formel (2) ist entscheidend dafür, ob homoleptische Komplexe gemäß Formel (3) oder heteroleptische Komplexe gemäß Formel (4) entstehen, wodurch dieses Verhältnis zum Steuern der Art des gewünschten Produkts dient.
Eine bevorzugte Ausführungsform des erfindungsgemäßen Verfahrens ist daher dadurch gekennzeichnet, daß das gesamtstöchiometrische Verhältnis von Iridium(III)salz zu Anionen gemäß Formel (2) 1 : 2 bis 1 : 4 beträgt, besonders bevorzugt 1 : 2 bis 1 : 3, ganz besonders bevorzugt 1 : 2 bis 1 : 2.5. Diese Bevorzugung resultiert aus der Beobachtung, daß bei einer Unterschreitung des genannten Verhältnisses die Gesamtausbeute an Produkt abnimmt, während bei Einhaltung dieses Verhältnisses der heteroleptische Komplex gemäß Formel (4) in sehr guter Ausbeute gebildet wird.
Eine weitere bevorzugte Ausführungsform des erfindungsgemäßen Verfahrens ist dadurch gekennzeichnet, daß das gesamtstöchiometrische Verhältnis von Iridium(III)salz zu Anionen gemäß Formel (2) mindestens 1 : 4 beträgt, bevorzugt 1 : 4 bis 1 : 100 beträgt, besonders bevorzugt 1 : 4 bis 1 : 20, ganz besonders bevorzugt 1 : 4 bis 1 : 10. Bei Einhaltung dieses Verhältnisses erhält man den homoleptischen Komplex gemäß Formel (3) in sehr guter Ausbeute.

Erfindungsgemäß beträgt das molare Verhältnis von Iridium(III)salz zu dem entsprechenden 1,3-Diketon, 3-Ketoester oder 1,3-Diester, aus dem durch Deprotonierung das β-Ketoketonatanion der Formel (2) *in situ* generiert wird, 1 : 2 bis 1 : 100.

Die Konzentration an Iridium(III)salz im Reaktionsmedium liegt bevorzugt im Bereich von 0.1 bis 1.0 mol/l.

Die Umsetzung wird in einem Temperaturbereich von 20 °C bis 200 °C durchgeführt, bevorzugt in einem Bereich von 50 °C bis 150 °C. Dabei ist es ganz besonders bevorzugt, wenn die Reaktion in dem entsprechenden Lösemittel oder Lösemittelgemisch unter Rückfluß durchgeführt wird. Dies bezieht sich auf beide Reaktionsschritte, vor und nach Austausch des Lösemittels.

Das Verfahren wird erfindungsgemäß in zwei (oder gegebenenfalls auch mehr) Schritten durchgeführt, wobei die Edukte in einem ersten Lösemittel oder Lösemittelgemisch zur Reaktion gebracht werden, dann das Lösemittel partiell oder vollständig, bevorzugt vollständig, unter weitgehendem Erhalt der Stoffmenge der salzartigen Komponenten ausgetauscht wird und die Reaktion in einem weiteren Reaktionsschritt in einem weiteren Lösemittel oder Lösemittelgemisch, das vom ersten verschieden ist, vervollständigt wird.
Dabei ist es bevorzugt, wenn das Lösemittel (bzw. Lösemittelgemisch) für den ersten Reaktionsschritt polarer ist als das Lösemittel (bzw. Lösemittelgemisch) für den zweiten Reaktionsschritt. Als Maß für die Polarität wird hier die Dielektrizitätskonstante des Lösemittels betrachtet, wobei das polarere Lösemittel die höhere Dielektrizitätskonstante aufweist. Werte für die Dielektrizitätskonstanten von Lösemitteln finden sich beispielsweise in CRC Handbook of Chemistry and Physics, 62nd edition, 1981-1982, CRC Press, E52-E54.

Die Reaktionsmedien für das erfindungsgemäße Verfahren enthalten in allen Schritten bevorzugt dipolar-protische und/oder dipolar-aprotische Lösemittel, sowie Gemische derselben.
Als Reaktionsmedien für das erfindungsgemäße Verfahren werden in allen Schritten bevorzugt nur dipolar-protische oder dipolar-aprotische Lösemittel, sowie Gemische derselben eingesetzt. Bevorzugte dipolar-protische Lösemittel sind Wasser, Alkohole, wie z. B. Methanol, Ethanol, *n*-Propanol, *i*-Propanol, *n*-Butanol, *i*-Butanol, *t*-Butanol, Ethylenglykol oder Propylenglykol, bzw. auch höhere Diole oder Polyalkohole, wie z. B. Glycerin, bzw. auch Polyetheralkohole, wie Polyethylenglykole. Bevorzugte dipolar-aprotische Lösemittel sind Dimethylsulfoxid, Dimethylformamid, Dimethylacetamid, Aceton oder N-Methyl-2-pyrrolidinon. Besonders bevorzugt sind in allen Reaktionsschritten dipolar-protische Lösemittel.

Bevorzugt sind die Edukte und Reaktionsprodukte bzw. Zwischenprodukte in dem Lösemitteln bzw. Lösemittelgemisch unter Reaktionsbedingungen überwiegend oder vollständig gelöst.

Erfindungsgemäß wird als Lösemittel für den ersten Reaktionsschritt vor Austausch des Lösemittels Wasser bzw. ein Gemisch aus Wasser mit einem dipolar-protischen oder dipolar-aprotischen Lösemittel verwendet. Dabei beträgt der Anteil an Wasser bevorzugt mindestens 50 %. Besonders bevorzugt wird als Lösemittel für den ersten Reaktionsschritt Wasser verwendet.
Bevorzugt werden als Lösemittel für den zweiten Reaktionsschritt nach Austausch des Lösemittels ein oder mehrere dipolar-protische Lösemittel, insbesondere Alkohole, oder Mischungen aus einem oder mehreren dipolar-protischen Lösemitteln mit Wasser oder einem oder mehreren dipolar-aprotischen Lösemitteln verwendet. Besonders bevorzugt wird als Lösemittel für den zweiten Reaktionsschritt ein Alkohol verwendet, ganz besonders bevorzugt Methanol oder Ethanol, insbesondere Methanol.

Die Reaktionszeit für den ersten Reaktionsschritt beträgt bevorzugt zwischen 1 h und 24 h, besonders bevorzugt zwischen 4 h und 12 h. Die Reaktionszeit für den zweiten Reaktionsschritt beträgt bevorzugt zwischen 1 h und 24 h, besonders bevorzugt zwischen 4 h und 12 h.

Erfindungsgemäß wird das Zwischenprodukt bzw. Rohprodukt zwischen den beiden Reaktionsschritten als Feststoff isoliert. Dies kann bevorzugt durch Entfernen des Lösemittels geschehen, beispielsweise unter Vakuum und/oder bei erhöhter Temperatur. Dies hat weiterhin den Vorteil, daß dabei auch ein Überschuß an nicht deprotoniertem β-Ketoketon, β-Ketoester bzw. β-Diester entfernt werden kann. Im Gegensatz zu einer Filtration wird durch Entfernen des Lösemittels eine Abtrennung salzartiger Komponenten vermieden, wodurch die gesamte Reaktionsmischung in den zweiten Reaktionsschritt eingebracht wird; dadurch wird eine deutlich höhere Ausbeute erhalten.
Es ist auch möglich, die Lösemittel zwischen den Reaktionsschritten in einem kontinuierlichen Prozeß auszutauschen. In diesem Fall wird kein Zwischenprodukt bzw. Rohprodukt als Feststoff isoliert. Ein solcher kontinuierlicher Lösemittelaustausch ist beispielsweise möglich durch kontinuierliches Abdestillieren eines Lösemittels (gegebenenfalls als Azeotrop) und entsprechend kontinuierliches Nachgeben des zweiten Lösemittels. Weiterhin kann zum kontinuierlichen Lösemittelaustausch beispielsweise eine Membran verwendet werden, die für das erste Lösemittel eine höhere Durchlässigkeit aufweist als für das zweite Lösemittel. Geeignet ist hier vor allem die Pervaporation, bei der ein Dampfgemisch, das sich über der Reaktionslösung einstellt, infolge unterschiedlicher Permeabilität einer geeigneten Membran aufgetrennt wird. Durch ständiges Abpumpen des Dampfes auf der Gasseite der Membran erzeugt man ein Konzentrationsgefälle, das die Diffusion in Gang hält.
Um kleinere Anteile unlöslicher Reaktionsnebenprodukte zu entfernen, kann es sinnvoll sein, die kalte oder heiße Reaktionslösung zu filtrieren. Dies kann beim bzw. nach dem ersten und/oder beim bzw. nach dem zweiten Reaktionsschritt geschehen. Bevorzugt wird nach Durchführung des zweiten Reaktionsschritts filtriert. Eine Filtration und das Verwerfen des Rückstands ist nur dann sinnvoll, wenn das Produkt nicht aus der Reaktionsmischung ausfällt, da sonst die Ausbeute verringert wird. Bevorzugt wird zwischen dem ersten und dem zweiten Reaktionsschritt nicht filtriert.

Das Produkt kann nach dem zweiten Reaktionsschritt durch unterschiedliche Methoden, beispielsweise durch Kristallisation oder durch Extraktion, isoliert werden. Dabei ist die Isolierung des Produkts durch Kristallisation bevorzugt, da so das Produkt einfach, in hoher Reinheit und in guter Ausbeute zugänglich ist. Gleichzeitig wird hierdurch der Einsatz größerer Mengen gegebenenfalls giftiger, chlorierter und/oder cancerogener Lösemittel vermieden. Zur Kristallisation kann es hilfreich sein, die Reaktionslösung nach Durchführung des zweiten Reaktionsschritts (Erhitzen im zweiten Lösemittel bzw. Lösemittelgemisch) einzuengen und/oder zu kühlen, bevorzugt auf < 0 °C, besonders bevorzugt auf < -10 °C, um die Ausbeute des Produkts zu erhöhen. Zur weiteren Reinigung des Produkts kann es beispielsweise mit dem Lösemittel des ersten und/oder zweiten Reaktionsschritts oder anderen Lösemitteln gewaschen werden. Auch weitere dem Fachmann geläufige Reinigungsverfahren, wie beispielsweise Umkristallisation, sind möglich, sind jedoch im erfindungsgemäßen Verfahren nicht unbedingt nötig, da das Produkt bereits in hoher Reinheit anfällt.

Ein besonders bevorzugter praktischer Reaktionsablauf ist beispielsweise der folgende, ohne dadurch die Vielfalt der möglichen Variationen einschränken zu wollen:
Ein Iridium(II I)salz wird mit der gewünschten Menge Acetylaceton und der entsprechenden Menge Base (je nach dem gewünschten Produkt) in Wasser unter Rückfluß zur Reaktion gebracht. Nach Einengen zur Trockene im Vakuum unter erhöhter Temperatur wird der Rückstand in Methanol aufgenommen, unter Rückfluß erhitzt, heiß filtriert und das Volumen der Lösung eingeengt. Durch Kühlen kristallisiert das Produkt, Komplexe gemäß Formel (3) oder Formel (4), aus und kann durch Filtration und Waschen mit kaltem Methanol isoliert und gereinigt werden. Ob dabei Komplexe gemäß Formel (3) oder Formel (4) gebildet werden, hängt vom Verhältnis Iridium : Acetylacetonat ab.

Das erfindungsgemäße Verfahren zeichnet sich gegenüber den Verfahren gemäß dem Stand der Technik durch folgende Vorteile aus:
1. Durch das erfindungsgemäße Verfahren sind homoleptische Iridium(III)-ketoketonat-Verbindungen in sehr hoher Ausbeute bis über 60 % leicht zugänglich, während gemäß dem Stand der Technik nur Ausbeuten im Bereich von 5 bis 22 % beschrieben sind. Dies entspricht einer Steigerung der Ausbeute um einen Faktor von beinahe 3. Dies bietet einen enormen Vorteil für die ressourcenschonende Nutzung dieser seltenen Metalle.
2. Durch das erfindungsgemäße Verfahren sind ebenfalls heteroleptische Iridium(III)-ketoketonat-Verbindungen in sehr guten Ausbeuten zugänglich. Für diese heteroleptischen Verbindungen sind bislang keine Synthesen bekannt, jedoch ist deren Zugänglichkeit als Ausgangsverbindungen für weitere Synthesen äußerst wichtig.
3. Das erfindungsgemäße Verfahren benötigt keine gesundheitlich bedenklichen Lösemittel, da die Reaktion einfach in Wasser und Alkoholen durchgeführt werden kann und kein Extraktionsschritt mit chlorhaltigen Lösemitteln oder Benzol zur Isolierung der Komplexe nötig ist.
4. Das erfindungsgemäße Verfahren ist auch einfach im technischen Maßstab anzuwenden, da keine chromatographischen Verfahren zur Reinigung benötigt werden.

Durch das erfindungsgemäße Verfahren lassen sich Mischungen aus Komplexen gemäß Formel (4a) und (4b) synthetisieren, enthaltend 1 bis 99 % Komplexe gemäß Formel (4a) und 99 bis 1 % Komplexe gemäß Formel (4b). Bevorzugt enthält die Mischung 20 bis 80 % Komplexe gemäß Formel (4a) und 80 bis 20 % Komplexe gemäß Formel (4b), besonders bevorzugt 30 bis 70 % Komplexe gemäß Formel (4a) und 70 bis 30 % Komplexe gemäß Formel (4b), ganz besonders bevorzugt 35 bis 65 % Komplexe gemäß Formel (4a) und 65 bis 35 % Komplexe gemäß Formel (4b). Die oben genannten Mischungen können außer Komplexen gemäß Formel (4a) und Komplexen gemäß Formel (4b) noch weitere Iridium-Komplexe enthalten, beispielsweise Komplexe gemäß Formel (3) oder auch andere Iridium-Komplexe.

Die vorliegende Erfindung wird durch die nachfolgenden Beispiele näher erläutert, ohne diese jedoch auf die Beispiele einschränken zu wollen. Dem Fachmann auf dem Gebiet der Koordinationschemie ist es hiermit ohne weitere erfinderische Tätigkeit möglich, an weiteren Systemen - wie oben beschrieben - die erfindungsgemäßen Umsetzungen durchzuführen.

### Beispiele

Die nachfolgenden Synthesen wurden ohne Verwendung einer Schutzgasatmosphäre durchgeführt. Die verwendeten Chemikalien (Lösemittel, Acetylaceton, Natrium-acetylacetonat, anorganische Salze) wurden von der Fa. Aldrich (Taufkirchen, Deutschland) bezogen. Iridium(III)chlorid (Hydrochlorid) Hydrat - nachfolgend berechnet nach der idealisierten Formel IrCl₃ · 3H₂O - wurde von der Fa. Heraeus (Hanau, Deutschland) bezogen.

### Beispiel 1: Natrium(bis(acetylacetonato)dichloro)iridat(III), (Gemisch der cis- und trans-Isomeren) und Tris(acetylacetonato)iridium(III)

Eine Lösung von 35.3 g (100 mmol) IrCl₃ · 3H20 in 200 ml destilliertem Wasser wurde unter gutem Rühren mit ca. 200 ml 1 M wäßriger Natriumhydrogencarbonat-Lösung und dann mit 20.5 ml (200 mmol) Acetylaceton versetzt. Nach 10 h Erhitzen auf 100 °C wurde die Reaktionsmischung im Vakuum (1 mbar) bei 80 - 90 °C zur Trockene eingeengt. Der Rückstand wurde in 400 ml Methanol aufgenommen, 8 h unter Rückfluß erhitzt und heiß filtriert (Fritte P4). Das Filtrat wurde auf ein Volumen von 70 ml eingeengt und 24 h bei -20 °C gelagert. Die gebildeten Kristalle wurden abgesaugt, mit wenig kaltem Methanol gewaschen und getrocknet. Die Ausbeute an orangefarbenen nadeligen Kristallen betrug 23.1 g (48 mmol), entsprechend 47.7 % d. Th.
Analytische Daten von Natrium(bis(acetylacetonato)dichloro)iridat(III):
¹H-NMR (DMSO-d6), Gemisch: δ [ppm] = 5.35, 5.33, 1.82, 1.81, 1.71.
*cis*-Isomer: δ [ppm] = 5.35 (s, 2H, CH), 1.82 (s, 6H, CH₃), 1.71 (s, 6H, CH₃). *trans*-Isomer: δ [ppm] = 5.33 (s, 2H, CH), 1.81 (s, 12 H, CH₃).
Verhältnis *cis : trans* = 1.6 : 1.
¹³C-{¹H}-NMR (DMSO-d6), Gemisch: δ [ppm] = 183.28, 182.76, 181.68, 101.56, 101.25, 26.35, 26.15, 25.88.
*cis*-Isomer: δ [ppm] = 183.28, 182.76 (CO), 101.25 (CH), 26.15, 25.88 (CH₃).
*trans*-Isomer: δ [ppm] = 181.68 (CO), 101.56 (CH); 26.35 (CH₃).
MS (Anionen ESI): M- = 459.0, 460.0, 461.0, 461.9, 462.9, 464.0, 464.9.
EA: Ber. = 24.8 % C, 2.9 % H, 14.6 % Cl, 39.7 % Ir; Gef. = 23.9 % C, 2.8 % H, 15.0 % Cl, 39.2 % Ir.

Analytische Daten von Tris(acetylacetonato)iridium(III) sind in Benett et al. (Inorg. Chem. 1976, 15, 2936) beschrieben.

### Beispiel 2 bis 8: Ergebnisse der Variation der Reaktionsbedingungen

Entsprechend dem in Beispiel 1 angegebenen Verfahren wurden mehrere Experimente zur Darstellung von Natrium[bis-acetylacetonato-dichloro]iridat(III), (Na[Ir(acac)₂Cl_{2]}) und Tris[acetylacetonato]iridium(III) Ir(acac)₃ durchgeführt. In der nachfolgenden Tabelle sind die molaren Verhältnisse der Edukte und die Ausbeute an Produkt aufgeführt.

| Beispiel | IrCl₃ · 3H₂O | Hacac | NaHCO₃ ≡ acac⁻ | Na[Ir(acac)₂Cl₂] [%] | Ir(acac)₃ [%] |
|---|---|---|---|---|---|
| 1 | 1 | 2 | 2 | 47.7 | 0 |
| 2 | 1 | 3 | 2 | 49.1 | 0 |
| 3 | 1 | 3 | 3 | 48.3 | 0 |
| 4 | 1 | 4 | 2 | 43.4 | 2 |
| 5 | 1 | 4 | 4 | 38.0 | 3.4 |
| 6 | 1 | 8 | 6 | 2.2 | 45.6 |
| 7 | 1 | 16 | 10 | 0 | 61.3 |
| 8 | 1 | 2* Naacac | --- | 46.9 | 0 |

| | | | | | |
|---|---|---|---|---|---|
| * Für Beispiel 8 wurde Natriumacetylacetonat ohne weiteren Zusatz einer Base eingesetzt. | | | | | |

### Beispiel 9: Natrium(bis(acetylacetonato)dichloro)iridat(III), (Gemisch der cis- und trans-Isomeren) und Tris(acetylacetonato)iridium(III)

Eine Lösung von 35.3 g (100 mmol)IrCl₃ · 3H₂O in 200 ml destilliertem Wasser wurde unter gutem Rühren durch Zugabe von ca. 80 ml 1 M wäßriger Natriumhydrogencarbonat-Lösung auf einen pH = 4.5 +/- 0.5 eingestellt. Anschließend wurde die Mischung mit 90.0 ml (875 mmol) Acetylaceton versetzt und 30 min. unter Rückfluß erhitzt. Nach Erkalten auf Raumtemperatur wurde durch sukzessive Zugabe von ca. 20 bis 40 ml 1 M wäßriger Natriumhydrogencarbonat-Lösung erneut auf einen pH = 4.5 +/- 0.5 eingestellt. Nach erneutem 12 h Kochen unter Rückfluß und Erkalten auf Raumtemperatur wurde durch sukzessive Zugabe von ca. 20 bis 40 ml 1 M wäßriger Natriumhydrogencarbonat-Lösung erneut auf einen pH = 4.5 +/- 0.5 eingestellt und weitere 6 h unter Rückfluß erhitzt. Der letztgenannte Zyklus von pH-Einstellung und 6 h Erhitzen unter Rückfluß wurde so lange wiederholt, bis insgesamt 300 ml der 1 M wäßrigen Natriumhydrogencarbonat-Lösung verbraucht waren, entsprechend einem gesamtstöchiometrischen Iridium : Hydrogencarbonat und damit einem Natriumacetylacetonat-Verhältnis von 1 : 3. Anschließend wurde die Reaktionsmischung im Vakuum (1 mbar) bei 80 - 90 °C zur Trockene eingeengt. Der Rückstand wurde in 400 ml Methanol aufgenommen, 8 h unter Rückfluß erhitzt und heiß filtriert (P4): Das Filtrat wurde auf ein Volumen von 70 ml eingeengt und 24 h bei -20 °C gelagert. Die gebildeten Kristalle wurden abgesaugt, mit wenig kaltem Methanol gewaschen und getrocknet. Die Ausbeute an orangefarbenen nadeligen Kristallen betrug 23.6 g (49 mmol), entsprechend 48.7 % d. Th.
Analytische Daten siehe Beispiel 1.

### Beispiele 10 bis 16: Ergebnisse der Variation der Reaktionsbedingungen

Entsprechend der in Beispiel 9 angegeben Verfahrensweise wurden mehrere Experimente zur Darstellung von Natrium(bis(acety(acetonato)dichloro)iridat(III), (Na[Ir(acac)₂Cl₂]) bzw. Tris(acetylacetonato)iridium(III) Ir(acac)₃ durchgeführt. In der nachfolgenden Tabelle sind die molaren Verhältnisse der Edukte und die Ausbeute an Produkt aufgeführt.

| Beispiel | IrCl₃ · 3H₂O | Hacac | NaHCO₃ ≡ acac⁻ | Na[Ir(acachCl₂] [%] | Ir(acac)₃ [%] |
|---|---|---|---|---|---|
| 9 | 1 | 8.75 | 3 | 48.7 | 0 |
| 10 | 1 | 8.75 | 2 | 41.0 | 0 |
| 11 | 1 | 8.75 | 3.5 | 47.9 | 0 |
| 12 | 1 | 8.75 | 4 | 47.1 | 2.0 |
| 13 | 1 | 8.75 | 4.5 | 31.8 | 24.5 |
| 14 | 1 | 8.75 | 5 | 21.0 | 33.1 |
| 15 | 1 | 8.75 | 6 | 1.7 | 61.4 |
| 16 | 1 | 16 | 3 | 49.0 | 0 |

### Beispiel 17: Tris(acetylacetonato)iridium(III) (Vergleichsbeispiel)

Eine Lösung von 35.3 g (100 mmol) IrCl₃ · 3H₂O in 200 ml destilliertem Wasser wurde unter gutem Rühren mit ca. 600 ml 1 M wäßriger Natriumhydrogencarbonat-Lösung und dann mit 82.3 ml (800 mmol) Acetylaceton versetzt. Nach 10 h Erhitzen auf 100 °C ließ man die Reaktionsmischung erkalten. Der gelbe Niederschlag wurde abgesaugt und je dreimal mit Wasser (50 ml) und Methanol (20 ml) gewaschen. Die Ausbeute betrug 8.3 g (17 mmol), entsprechend 17.0 % d. Th. In der Mutterlauge konnte kein definiertes Produkt nachgewiesen werden.

### Beispiel 18: Tris(acetylacetonato)iridium(III) (Vergleichsbeispiel)

Eine Lösung von 35.3 g (100 mmol) IrCl₃ · 3H20 in 400 ml Methanol wurde mit 50.4 g (600 mmol) Natriumhydrogencarbonat und dann mit 82.3 ml (800 mmol) Acetylaceton versetzt. Nach 10 h Erhitzen unter Rückfluß ließ man die Reaktionsmischung erkalten. Es fiel kein Tris(acetylacetonato)iridium(III) aus. Auch nach Einengen auf ca. 150 ml kristallisierte kein Tris(acetylacetonato)iridium(III) aus, und es konnte in der Reaktionslösung kein definiertes Produkt nachgewiesen werden.

### Beispiel 19: Tris(acetylacetonato)iridium(III) (Vergleichsbeispiel)

Die Reaktion wurde wie in Beispiel 17 durchgeführt mit dem Unterschied, daß die Reaktion in 100 ml destilliertem Wasser und 100 ml Methonol durchgeführt wurde. Es entstand ein gelber Niederschlag, der abgesaugt und mit kaltem Methanol gewaschen wurde. Die Ausbeute betrug 5.9 g (12 mmol), entsprechend 12 % d. Th. In der Mutterlauge konnte kein definiertes Produkt nachgewiesen werden.

Wie man also aus den erfindungsgemäßen Beispielen 1 bis 16 sieht, lassen sich nach dem erfindungsgemäßen Verfahren homoleptische und heteroleptische Iridiumketoketonat-Verbindungen in sehr guter Ausbeute synthetisieren. Wird die Reaktion dagegen gemäß dem Stand der Technik nur in Wasser durchgeführt, ist die Ausbeute an Iridiumkomplex deutlich geringer. Wird die Reaktion nur in Methanol durchgeführt, lässt sich überhaupt kein definiertes Produkt isolieren.

## Patentansprüche

1. Verfahren zur Herstellung von Iridium(III)-Komplexen der Formel (3) oder (4), 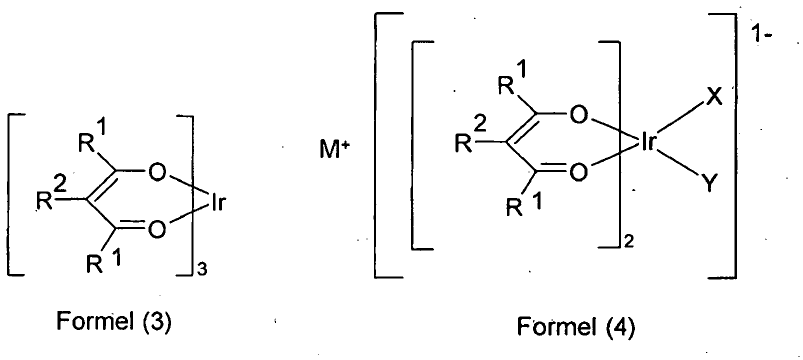 wobei gilt:
X, Y ist gleich oder verschieden bei jedem Auftreten ein einzähniger, monoanionischer Ligand, der über ein Heteroatom an das Iridium gebunden ist;
M⁺ ist ein einwertiges Kation;
R¹, R² ist gleich oder verschieden bei jedem Auftreten H, CN, eine geradkettige, verzweigte oder cyclische Alkyl- oder Alkoxygruppe mit 1 bis 20 C-Atomen, wobei eine oder mehrere nicht benachbarte CH₂-Grüppen durch -O-, -S-, -NR³-, -CONR³-, -CO-O-, -CR³=CR³- oder -C=C- ersetzt sein können und wobei ein oder mehrere H-Atome durch F ersetzt sein können, oder ein aromatisches oder heteroaromatisches Ringsystem mit 4 bis 14 C-Atomen, das durch einen oder mehrere nicht-aromatische Reste R¹ substituiert sein kann; dabei können mehrere Substituenten R¹ und/oder R² zusammen wiederum ein weiteres mono- oder polycyclisches, aliphatisches oder aromatisches Ringsystem aufspannen;
R³ ist gleich oder verschieden bei jedem Auftreten H oder ein aliphatischer oder aromatischer Kohlenwasserstoffrest mit 1 bis 20 C-Atomen,
durch Umsetzung eines Iridium(III)salzes mit Verbindungen enthaltend Anionen gemäß Formel (2), 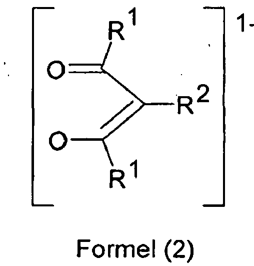 wobei für die Synthese von Komplexen der Formel (3) das gesamtstöchiometrische Verhältnis von Iridium-(III)salz zu Anion gemäß Formel (2) 1 : 4 bis 1 : 100 beträgt und für die Synthese von Komplexen der Formel (4) das gesamtstöchiometrische Verhältnis von Iridium(III)salz zu Anion gemäß Formel (2) 1 : 2 bis 1 : 4 beträgt,
**dadurch gekennzeichnet, daß** die Edukte in einem ersten Lösemittel oder Lösemittelgemisch zur Reaktion gebracht werden, wobei als Lösemittel Wasser bzw. ein Gemisch aus Wasser mit einem dipolar-protischen oder dipolar-aprotischen Lösemittel verwendet wird, dann das Lösemittel oder Lösemittelgemisch partiell oder vollständig unter überwiegendem Erhalt der Stoffmenge der salzartigen Komponenten der Reaktionsmischung ausgetauscht wird, wobei der Lösemittelaustausch nicht durch Abfiltrieren eines-ausgefallenen Anteils des bereits entstandenen Produkts mit anschließender Umkristallisation erfolgt und wobei zwischen dem ersten und dem zweiten Reaktionsschritt nicht filtriert wird, und die Reaktion in einem weiteren Schritt in einem weiteren Lösemittel oder Lösemittelgemisch, das vom ersten Lösemittel oder Lösemittelgemisch verschieden ist und das ein dipolar-protisches Lösemittel ist, vervollständigt wird, wobei das Zwischenprodukt bzw. Rohprodukt nach dem ersten Reaktionsschritt als Feststoff isoliert wird und wobei die Umsetzung in einem Temperaturbereich von 20 °C bis 200 °C durchgeführt wird.

2. Verfahren gemäß Anspruch 1, **dadurch gekennzeichnet, daß** X = Y ist.

3. Verfahren gemäß den Ansprüchen 1 oder 2, **dadurch gekennzeichnet, daß** der gebildete heteroleptische Iridium(III)-Komplex ein Gemisch aus dem *cis*-Isomeren (Formel 4a) und dem *trans*-Isomeren (Formel 4b) bezüglich der X- und Y-Liganden ist, 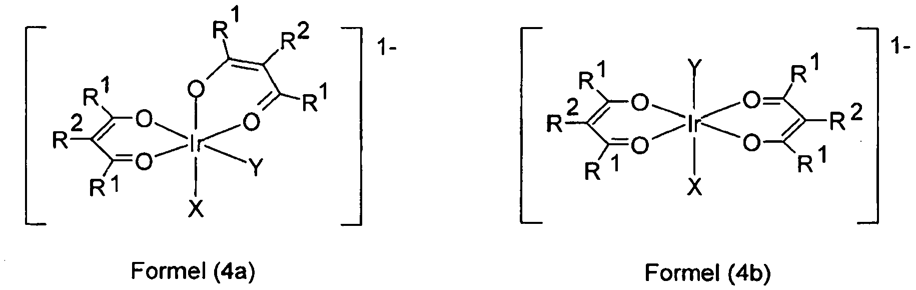 wobei R¹, R² und R³, X und Y die unter Anspruch 1 genannten Bedeutungen haben.

4. Verfahren gemäß einem oder mehreren der Ansprüche 1 bis 3, **dadurch gekennzeichnet, daß** die Liganden X und Y ausgewählt sind aus F⁻, Cl⁻, Br⁻, I⁻, OH⁻, OR⁻, CN⁻, OCN⁻, SCN⁻, NO2⁻, NO3⁻ oder R-COO⁻, wobei R für einen organischen Rest mit 1 bis 20 C-Atomen steht.

5. Verfahren gemäß Anspruch 4, **dadurch gekennzeichnet, daß** X und Y = Cl⁻, Br⁻ oder OH- ist.

6. Verfahren gemäß einem oder mehreren der Ansprüche 1 bis 5, **dadurch gekennzeichnet, daß** als Ausgangsverbindung Iridium(III)salze der Formel IrX₃ oder M₃IrX₆, wobei M gleich einem Proton, einem Alkalimetallkation oder einem Ammoniumion ist und X die unter Anspruch 1 genannte Bedeutung hat, oder gegebenenfalls ein Hydrat oder ein Hydrochlorid Hydrat dieser Salze, eingesetzt werden.

7. Verfahren gemäß Anspruch 6, **dadurch gekennzeichnet, daß** als Ausgangsverbindung Iridium(III)chlorid in Form des Hydrats oder Hydrochlorid Hydrats der Formel IrCl₃ * y H₂O oder IrCl₃ ∗ x HCl ∗ y H₂O mit x = 0 bis 10 und y = 0 bis 100 verwendet wird.

8. Verfahren gemäß einem oder mehreren der Ansprüche 1 bis 7, **dadurch gekennzeichnet, daß** die heteroleptischen Iridium(III)-Komplexe gemäß Formel (4) als Gegenkation ein Alkali-, ein Erdalkali-, ein Ammonium-, ein Tetraalkylammonium-, ein Tetraalkylphosphonium- oder ein Tetraarylphosphoniumkation besitzen.

9. Verfahren gemäß Anspruch 8, **dadurch gekennzeichnet, daß** die Komplexe als Gegenkation ein Alkalikation besitzen.

10. Verfahren gemäß einem oder mehreren der Ansprüche 1 bis 9, **dadurch gekennzeichnet, daß** gilt:
R¹, R² ist gleich oder verschieden bei jedem Auftreten H, eine geradkettige, verzweigte oder cyclische Alkyl- oder Alkoxygruppe mit 1 bis 5 C-Atomen, wobei auch ein oder mehrere H-Atome durch F ersetzt sein können, oder eine Aryl- oder Heteroarylgruppe mit 4 bis 6 C-Atomen, die durch einen oder mehrere nicht aromatische Reste R¹ substituiert sein kann.

11. Verfahren gemäß Anspruch 10, **dadurch gekennzeichnet, daß** R¹ = CH₃ und R² = H ist.

12. Verfahren gemäß einem oder mehreren der Ansprüche 1 bis 11, **dadurch gekennzeichnet, daß** die Verbindungen enthaltend Anionen gemäß Formel (2) in Form eines Salzes eines einwertigen oder zweiwertigen anorganischen oder organischen Kations eingesetzt wird oder *in situ* durch Deprotonierung aus dem entsprechenden 1,3-Diketon, 3-Ketoester oder 1;3-Diester mit einer Base dargestellt werden.

13. Verfahren gemäß einem oder mehreren der Ansprüche 1 bis 12, **dadurch gekennzeichnet, daß** die Deprotonierung des 1,3-Diketons, 3-Ketoester oder 1,3-Diester unter Bildung der Verbindung gemäß Formel (2) mit Hydrogencarbonat, Carbonat, Hydroxid oder wäßrigem Ammoniak erfolgt.

14. Verfahren gemäß einem oder mehreren der Ansprüche 1 bis 13, **dadurch gekennzeichnet, daß** die Umsetzung unter Rückfluß durchgeführt wird.

15. Verfahren gemäß einem oder mehreren der Ansprüche 1 bis 14, **dadurch gekennzeichnet, daß** das Lösemittel bzw. Lösemittelgemisch für den ersten Reaktionsschritt polarer ist als das Lösemittel bzw. Lösemittelgemisch für den weiteren Reaktionsschritt.

16. Verfahren gemäß einem oder mehreren der Ansprüche 1 bis 15, **dadurch gekennzeichnet, daß** als Lösemittel Wasser, Alkohole, Glykole, höhere Diole, Polyalkohole, Polyetheralkohole, Dimethylsulfoxid, Dimethylformamid, Dimethylacetamid, Aceton oder N-Methyl-2-pyrrolidinon eingesetzt werden.

17. Verfahren gemäß einem oder mehreren der Ansprüche 1 bis 16, **dadurch gekennzeichnet, daß** als Lösemittel für den ersten Reaktionsschritt vor Austausch des Lösemittels Wasser verwendet wird.

18. Verfahren gemäß einem oder mehreren der Ansprüche 1 bis 17, **dadurch gekennzeichnet, daß** als Lösemittel für den zweiten Reaktionsschritt nach Austausch des Lösemittels ein Alkohol verwendet wird.

19. Verfahren gemäß Anspruch 18, **dadurch gekennzeichnet, daß** als Lösemittel für den zweiten Reaktionsschritt Methanol verwendet wird.

20. Verfahren gemäß einem oder mehreren der Ansprüche 1 bis 19, **dadurch gekennzeichnet, daß** das Produkt gemäß Formel (3) oder Formel (4) durch Kristallisation isoliert wird, gegebenenfalls durch Einengen der Lösung und/oder Kühlen.

## Claims

1. Process for the preparation of iridium(III) complexes of the formula (3) or (4), 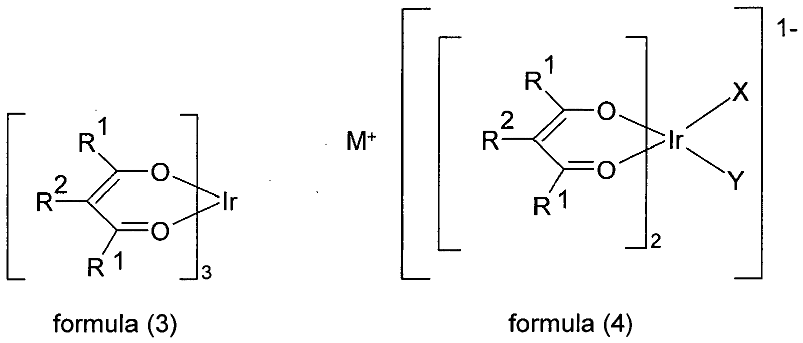 where:
X, Y are, identically or differently on each occurrence, a monodentate, monoanionic ligand which is bonded to the iridium via a heteroatom;
M⁺ is a monovalent cation;
R¹, R² are, identically or differently on each occurrence, H, CN, a straight-chain, branched or cyclic alkyl or alkoxy group having 1 to 20 C atoms, in which one or more non-adjacent CH₂ groups may be replaced by -O-, -S-, -NR³-, -CONR³-, -CO-O-, -CR³=CR³- or -C≡C- and in which one or more H atoms may be replaced by F, or an aromatic or heteroaromatic ring system having 4 to 14 C atoms, which may be substituted by one or more non-aromatic radicals R¹; a plurality of substituents R¹ and/or R² here may together in turn form a further mono- or polycyclic, aliphatic or aromatic ring system;
R³ is, identically or differently on each occurrence, H or an aliphatic or aromatic hydrocarbon radical having 1 to 20 C atoms;
by reaction of an iridium(III) salt with compounds containing anions of the formula (2), 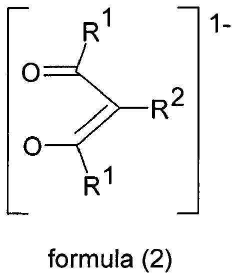 where, for the synthesis of complexes of the formula (3), the overall stoichiometric ratio of iridium(III) salt to anion of the formula (2) is 1 : 4 to 1 : 100 and, for the synthesis of complexes of the formula (4), the overall stoichiometric ratio of iridium(III) salt to anion of the formula (2) is 1 : 2 to 1 : 4,
**characterised in that** the starting materials are brought to reaction in a first solvent or solvent mixture, where the solvent used is water or a mixture of water with a dipolar-protic or dipolar-aprotic solvent, the solvent or solvent mixture is then partly or completely exchanged with substantial retention of the molar amount of the salt-like components of the reaction mixture, where the solvent exchange is not carried out by filtering off a precipitated-out fraction of the product that has already formed with subsequent recrystallisation and where filtration is not carried out between the first and second reaction steps, and the reaction is completed in a further step in a further solvent or solvent mixture which is different from the first solvent or solvent mixture and which is a dipolar-protic solvent, where the intermediate or crude product is isolated as a solid after the first reaction step and where the reaction is carried out in a temperature range from 20°C to 200°C.

2. Process according to Claim 1, **characterised in that** X = Y.

3. Process according to Claim 1 or 2, **characterised in that** the heteroleptic iridium(III) complex formed is a mixture of the *cis* isomer (formula 4a) and the *trans* isomer (formula 4b) with respect to the X and Y ligands, 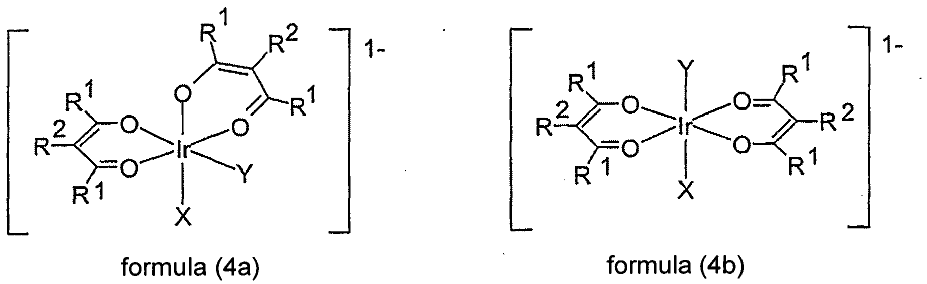 where R¹, R² and R³, X and Y have the meanings given under Claim 1.

4. Process according to one or more of Claims 1 to 3, **characterised in that** the ligands X and Y are selected from F⁻, Cl⁻, Br⁻, I⁻, OH⁻, OR⁻, CN⁻, OCN⁻, SCN⁻, NO₂⁻, NO₃⁻ or R-COO⁻, where R stands for an organic radical having 1 to 20 C atoms.

5. Process according to Claim 4, **characterised in that** X and Y = Cl⁻, Br⁻ or OH⁻.

6. Process according to one or more of Claims 1 to 5, **characterised in that** the starting compound employed is iridium(III) salts of the formula IrX₃ or M₃IrX₆, where M is equal to a proton, an alkali metal cation or an ammonium ion, and X has the meaning given under Claim 1, or optionally a hydrate or hydrochloride hydrate of these salts.

7. Process according to Claim 6, **characterised in that** the starting compound used is iridium(III) chloride in the form of the hydrate or hydrochloride hydrate of the formula IrCl₃ ∗ y H₂O or IrCl₃ ∗ x HCl ∗ y H₂O, where x = 0 to 10 and y = 0 to 100.

8. Process according to one or more of Claims 1 to 7, **characterised in that** the heteroleptic iridium(III) complexes of the formula (4) have an alkali-metal, alkaline-earth metal, ammonium, tetraalkylammonium, tetraalkylphosphonium or tetraarylphosphonium cation as countercation.

9. Process according to Claim 8, **characterised in that** the complexes have an alkali metal cation as countercation.

10. Process according to one or more of Claims 1 to 9, **characterised in that**:
R¹, R² are, identically or differently on each occurrence, H, a straight-chain, branched or cyclic alkyl or alkoxy group having 1 to 5 C atoms, in which, in addition, one or more H atoms may be replaced by F, or an aryl or heteroaryl group having 4 to 6 C atoms, which may be substituted by one or more non-aromatic radicals R¹.

11. Process according to Claim 10, **characterised in that** R¹ = CH₃ and R² = H.

12. Process according to one or more of Claims 1 to 11, **characterised in that** the compounds containing anions of the formula (2) are employed in the form of a salt of a monovalent or divalent inorganic or organic cation or are prepared *in situ* by deprotonation of the corresponding 1,3-diketone, 3-ketoester or 1,3-diester using a base.

13. Process according to one or more of Claims 1 to 12, **characterised in that** the deprotonation of the 1,3-diketone, 3-ketoester or 1,3-diester with formation of the compound of the formula (2) is carried out using hydrogencarbonate, carbonate, hydroxide or aqueous ammonia.

14. Process according to one or more of Claims 1 to 13, **characterised in that** the reaction is carried out under reflux.

15. Process according to one or more of Claims 1 to 14, **characterised in that** the solvent or solvent mixture for the first reaction step is more polar than the solvent or solvent mixture for the further reaction step.

16. Process according to one or more of Claims 1 to 15, **characterised in that** the solvents employed are water, alcohols, glycols, higher diols, polyalcohols, polyether alcohols, dimethyl sulfoxide, dimethylformamide, dimethylacetamide, acetone or N-methyl-2-pyrrolidinone.

17. Process according to one or more of Claims 1 to 16, **characterised in that** the solvent used for the first reaction step before exchange of the solvent is water.

18. Process according to one or more of Claims 1 to 17, **characterised in that** the solvent used for the second reaction step after exchange of the solvent is an alcohol.

19. Process according to Claim 18, **characterised in that** the solvent used for the second reaction step is methanol.

20. Process according to one or more of Claims 1 to 19, **characterised in that** the product of the formula (3) or formula (4) is isolated by crystallisation, if necessary by concentration of the solution and/or cooling.

## Revendications

1. Procédé pour la préparation de complexes d'iridium(III) de la formule (3) ou (4), 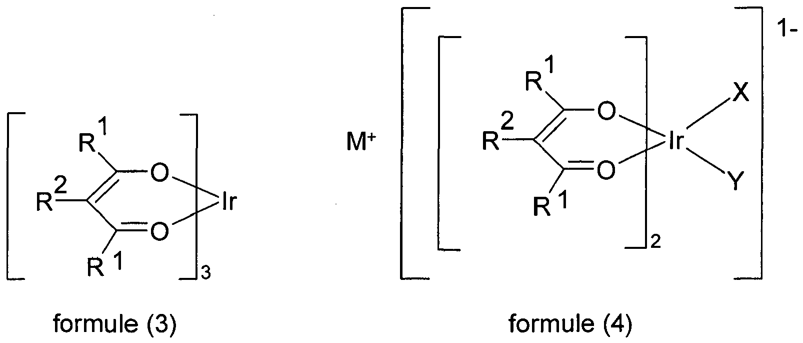 dans lesquelles :
X, Y sont, de manière identique ou différente pour chaque occurrence, un ligand monodenté, monoanionique qui est lié à l'iridium via un hétéro-atome ;
M⁺ est un cation monovalent ;
R¹, R² sont, de manière identique ou différente pour chaque occurrence, H, CN, un groupe alkyle ou alcoxy en chaîne droite, ramifié ou cyclique comportant de 1 à 20 atome(s) de C, où un ou plusieurs groupes CH₂ non adjacents peuvent être remplacés par -O-, -S-, -NR³-, -CONR³-, -CO-O-, -CR³=CR³- ou -C≡C- et où un ou plusieurs atome(s) de H peut/peuvent être remplacé(s) par F, ou un système de cycle aromatique ou hétéro-aromatique comportant de 4 à 14 atomes de C, lequel peut être substitué par un ou plusieurs radical/radicaux non aromatique(s) R¹; une pluralité de substituants R¹ et/ou R² peuvent ici former en association tour à tour un autre système de cycle monocyclique ou polycyclique, aliphatique ou aromatique ;
R³ est, de manière identique ou différente pour chaque occurrence, H ou un radical hydrocarbone aliphatique ou aromatique comportant de 1 à 20 atome(s) de C ;
par réaction d'un sel d'iridium(III) avec des composés contenant des anions de la formule (2), 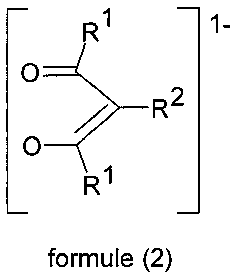 où, pour la synthèse de complexes de la formule (3), le ratio stoechiométrique global sel d'iridium(III) sur anion de la formule (2) est 1 : 4 à 1 : 100 et, pour la synthèse de complexes de la formule (4), le ratio stoechiométrique global sel d'iridium(III) sur anion de la formule (2) est 1 : 2 à 1 : 4,
**caractérisé en ce que** les matériaux de départ sont amenés à réaction dans un premier solvent ou mélange de solvents, où le solvent utilisé est de l'eau ou un mélange d'eau avec un solvent dipolaire-protique ou dipolaire-aprotique, le solvent ou mélange de solvents est ensuite partiellement ou complètement échangé selon une rétention substantielle de la quantité molaire des composants similaires à des sels du mélange de réaction, où l'échange de solvent(s) n'est pas mis en oeuvre par évacuation par filtrage d'une fraction extraite par précipitation du produit qui a déjà été formé avec une recristallisation qui s'ensuit et où une filtration n'est pas mise en oeuvre entre les première et seconde étapes de réaction, et la réaction est terminée lors d'une autre étape dans un autre solvent ou mélange de solvents qui est différent du premier solvent ou mélange de solvents et qui est un solvent dipolaire-protique, où le produit intermédiaire ou brut est isolé en tant que solide après la première étape de réaction et où la réaction est mise en oeuvre dans une plage de températures de 20°C à 200°C.

2. Procédé selon la revendication 1, **caractérisé en ce que** X = Y.

3. Procédé selon la revendication 1 ou 2, **caractérisé en ce que** le complexe d'indium(III) hétéroleptique formé est un mélange du *cis* isomère (formule 4a) et du *trans* isomère (formule 4b) en relation avec les ligands X et Y, 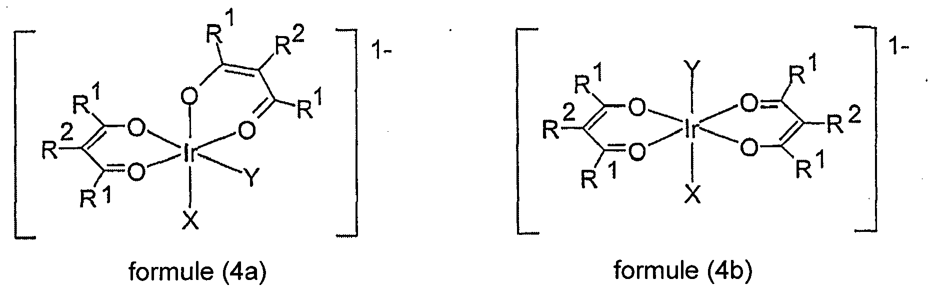 où R¹, R² et R³, X et Y présentent les significations données selon la revendication 1.

4. Procédé selon une ou plusieurs des revendications 1 à 3, **caractérisé en ce que** les ligands X et Y sont choisis parmi F⁻, Cl⁻, Br⁻, I⁻, OH⁻, OR-, CN⁻, OCN⁻, SCN⁻, NO₂⁻, NO₃- ou R-COO⁻, où R représente un radical organique comportant de 1 à 20 atome(s) de C.

5. Procédé selon la revendication 4, **caractérisé en ce que** X et Y = CI⁻, Br⁻ ou OH⁻.

6. Procédé selon une ou plusieurs des revendications 1 à 5, **caractérisé en ce que** le composé de départ utilise est des sels d'iridium(III) de la formule IrX₃ ou M₃IrX₆, où M est égal à un proton, un cation de métal alcalin ou un ion ammonium, et X présente la signification donnée selon la revendication 1, ou en option un hydrate ou un hydrate d'hydrochlorure de ces sels.

7. Procédé selon la revendication 6, **caractérisé en ce que** le composé de départ utilisé est du chlorure d'iridium(III) sous la forme de l'hydrate ou de l'hydrate d'hydrochlorure de la formule IrCl₃ ∗ y H₂O ou IrCl₃ ∗ x HCl ∗ y H₂O, où x = 0 à 10 et y = 0 à 100.

8. Procédé selon une ou plusieurs des revendications 1 à 7, **caractérisé en ce que** les complexes d'iridium(III) hétéroleptiques de la formule (4) comportment un cation de métal alcalin, de métal alcalino-terreux, d'ammonium, de tétraalkylammonium, de tétraalkylphosphonium ou de tétraarylphosphonium en tant que contre-cation.

9. Procédé selon la revendication 8, **caractérisé en ce que** les complexes comportent un cation de métal alcalin en tant que contre-cation.

10. Procédé selon une ou plusieurs des revendications 1 à 9, **caractérisé en ce que** :
R¹, R² sont, de manière identique ou différente pour chaque occurrence, H, un groupe alkyle ou alcoxy en chaîne droite, ramifié ou cyclique comportant de 1 à 5 atome(s) de C, où, en outre, un ou plusieurs atome(s) de H peut/peuvent être remplacé(s) par F, ou un groupe aryle ou hétéroaryle comportant de 4 à 6 atomes de C, lequel peut être substitué par un ou plusieurs radical/radicaux non aromatique(s) R¹.

11. Procédé selon la revendication 10, **caractérisé en ce que** R¹ = CH₃ et R² = H.

12. Procédé selon une ou plusieurs des revendications 1 à 11, **caractérisé en ce que** les composés contenant des anions de la formule (2) sont utilisés sous la forme d'un sel d'un cation inorganique ou organique monovalent ou divalent ou sont préparés *in situ* par déprotonation du 1,3-dicétone, du 3-cétoester ou du 1,3-diester correspondant en utilisant une base.

13. Procédé selon une ou plusieurs des revendications 1 à 12, **caractérisé en ce que** la déprotonation du 1,3-dicétone, du 3-cétoester ou du 1,3-diester avec formation du composé de la formule (2) est mise en oeuvre en utilisant un hydrogènecarbonate, un carbonate, un hydroxyde ou de l'ammoniac aqueux.

14. Procédé selon une ou plusieurs des revendications 1 à 13, **caractérisé en ce que** la réaction est mise en oeuvre sous reflux.

15. Procédé selon une ou plusieurs des revendications 1 à 14, **caractérisé en ce que** le solvent ou mélange de solvents pour la première étape de réaction est plus polaire que le solvent ou mélange de solvents pour l'autre étape de réaction.

16. Procédé selon une ou plusieurs des revendications 1 à 15, **caractérisé en ce que** les solvents utilises sont de l'eau, des alcools, des glycols, des diols supérieurs, des polyalcools, des alcools de polyéther, du diméthyl sulfoxyde, du diméthylformamide, du diméthylacétamide, de l'acétone ou du N-méthyl-2-pyrrolidinone.

17. Procédé selon une ou plusieurs des revendications 1 à 16, **caractérisé en ce que** le solvent utilisé pour la première étape de réaction avant échange du solvent est de l'eau.

18. Procédé selon une ou plusieurs des revendications 1 à 17, **caractérisé en ce que** le solvent utilisé pour la seconde étape de réaction après échange du solvent est un alcool.

19. Procédé selon la revendication 18, **caractérisé en ce que** le solvent utilisé pour la seconde étape de réaction est du méthanol.

20. Procédé selon une ou plusieurs des revendications 1 à 19, **caractérisé en ce que** le produit de la formule (3) ou de la formule (4) est isolé par cristallisation, si nécessaire par concentration de la solution et/ou refroidissement.
